# EUROPEAN PATENT SPECIFICATION

(11) **EP 3 479 666 B1**
(45) Date of publication and mention of the grant of the patent: **04.05.2022**
(21) Application number: 18204980.9
(22) Date of filing: 07.11.2018
(51) Int. Cl.: A01B 33/16, A01B 33/12, A01B 27/00

(54) **MACHINE FOR WORKING A COMPACT SURFACE TO BE TILLED**
MACHINE ZUM BEARBEITEN VERFESTIGTER ZU FRÄSENDER OBERFLÄCHEN
MACHINE POUR TRAVAILLER DES SURFACES COMPACTÉES

(30) Priority: 07.11.2017 IT 201700126476
(43) Date of publication of application: 08.05.2019
(73) Proprietor: GEO S.A.S. di Tazzoli Antonio & C., 36042 Breganze VI (IT)
(72) Inventor: TAZZOLI, Antonio, 36042 Breganze VI (IT)
(74) Representative: Autuori, Angelo

(56) References cited:
- EP-A1- 1 836 889
- WO-A1-2006/041293
- WO-A1-2008/104903
- WO-A1-2012/168578
- GB-A- 2 379 853
- US-A- 5 069 292

## Description

### Field of the Invention

The present invention relates generally to the technical field of processing machines, and it particularly relates to a machine for the moving work of compact surface to be tilled.

### Background of the invention

Screening machines are widely known for the separation of waste, soils or similar so as to screen the latter and separate them according to size. For example, such machines will be able to separate soil into fine and coarse fractions, the latter generally containing medium and large-sized stones, or waste depending on the size.

These machines are generally static, which means that they are invested by a flow of material to be screened, which is transported by conveyor of a plant or by self-propelled machines such as trucks, bulldozers, tractors or similar.

Such known screening machines are therefore particularly ineffective in case it is necessary to screen the material of a compact surface such as soil, agricultural land, area covered with waste or the like. In such a situation, in fact, the compact surface is to be tilled first, in order to obtain a plurality of clods, and then screened.

In order to overcome this problem, from the application WO2006/041293 a self-propelled screening machine to till the compact surface and screen its clods in fine and coarse fraction is known.

More accurately, the tiller throws the tilled clods on a starscreen horizontally arranged in a position adjacent to the same tiller, wherein the rotation axes of the stars are perpendicular to the rotation axis of the tiller.

Consequently, the clods forward along the screen parallel to the tiller axis, thereby falling on the sides of the tiller.

Such solution has numerous drawbacks.

First of all, such machine has a low screening efficacy, since the clods thrown on the screen remain thereon for a period of time that is proportional to the throwing position. In particular, the clods thrown at the center of the screen remain thereon for a much shorter period of time than those thrown upstream. The clods thrown on the screen downstream of the center, which means towards the exit of the screen, remain thereon for an extremely short or no time.

Moreover, the bulkiness of such machine are very large in scale, despite the limited efficacy.

Furthermore, this machine is able to separate the clods exclusively in fine and coarse fraction, the former falling below the screen and the latter falling at its side.

From the international application WO2012/168578 a machine to continuously remove stones from an agricultural land is known. In particular, such well-known machine, in order to absorb the impacts of stones, includes one paddles conveyor belt covered with hard rubber, interposed between the screen and the rotor. The rotor is equipped with paddles to pick up stones and soil.

### Summary of the invention

Object of the present invention is to overcome, at least partially, the drawbacks illustrated above, by providing a machine having high functionality and cost-effectiveness.

Another object of the invention is to provide a machine with a high screening efficacy.

Another object of the invention is to provide a low-bulkiness machine.

Another object of the invention is to provide a machine that allows to discharge the fine and/or coarse material in staggered positions.

Such objects, as well as others that will be clearer hereinafter, are fulfilled by a machine according to what is herein described and/or shown, and claimed in the independent claims 1 and 13.

The dependent claims define advantageous embodiments of the invention.

### Brief description of the drawings

Further features and advantages of the present invention will become more evident by reading the detailed description of a preferred but not exclusive embodiment of the invention, illustrated as a non-limiting example, with the help of the annexed drawings, wherein:
**FIG. 1** is a schematic view of an embodiment of a machine **1** towed by a tractor **V;**
**FIG. 2** is a schematic view of an embodiment of the self-propelled machine **1;**

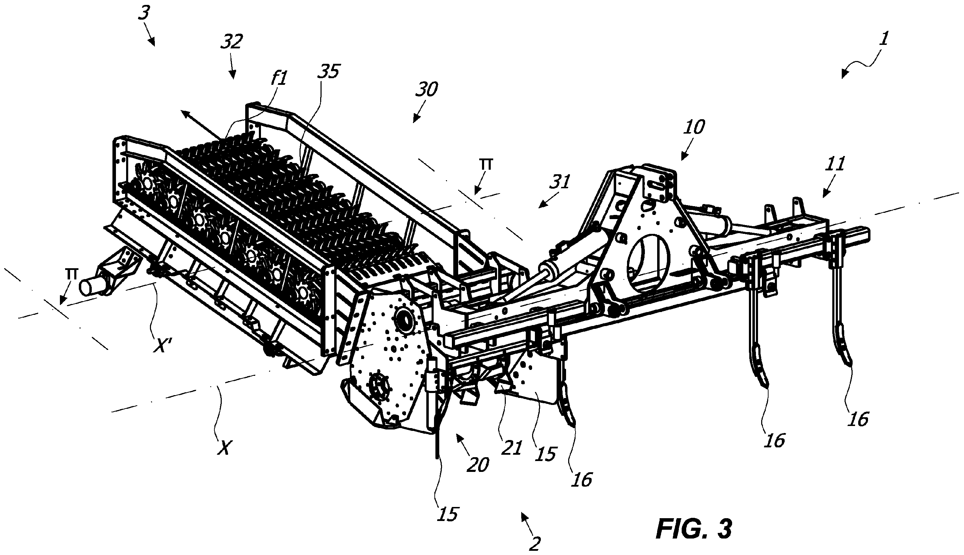

**FIG. 3** is an axonometric view of an embodiment of the machine **1,** wherein the carter **40** has been removed;

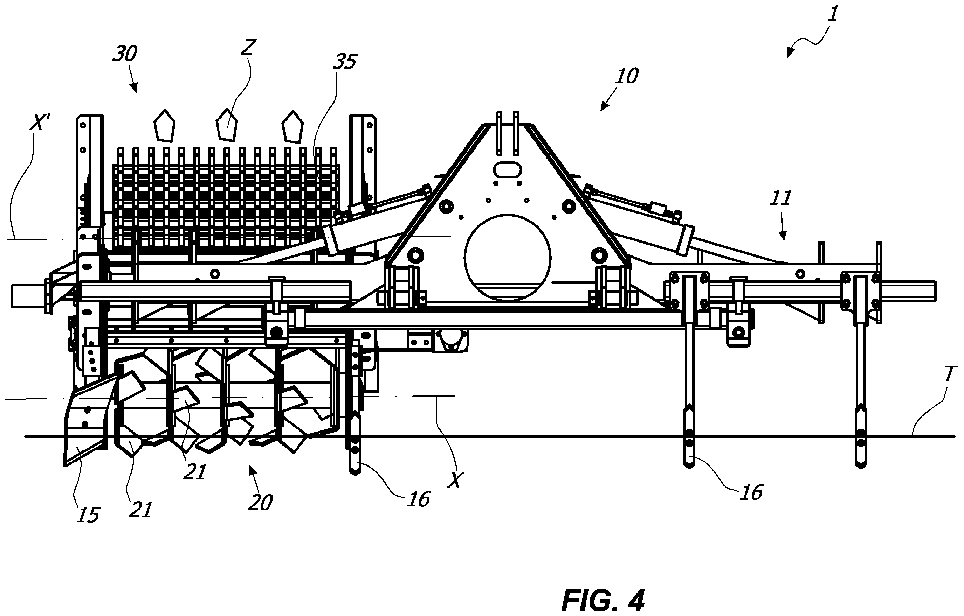

**FIG. 4** is a front view of an embodiment of the machine **1,** wherein the carter **40** has been removed;

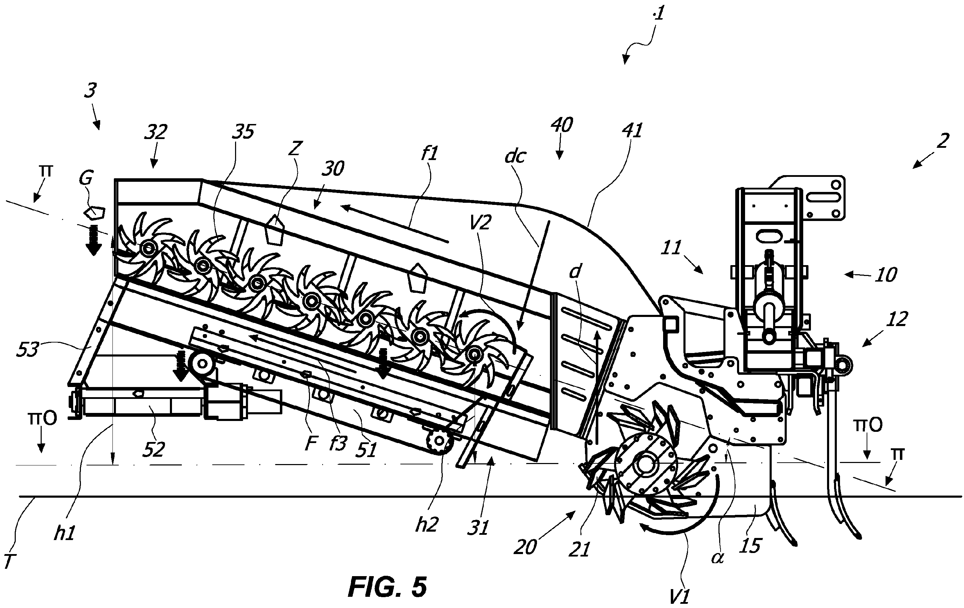

**FIG. 5** is a schematic side view of an embodiment of the machine **1;**
**FIGs. 6** and **7** are upper views of different embodiments of the machine **1;**
**FIG. 8** is a schematic side view of a further embodiment of the machine **1,** devoid of forwarding means **50;**
**FIGs. 9** to **12** are front views of different applications of the machine **1;**
**FIG. 13** is an axonometric view of a further embodiment of the machine **1** comprising a pair of screens **30** and a pair of tillers **20.**

### Detailed description of some preferred embodiments

With reference to the above mentioned figures, it is here described a processing machine **1** for the continuous and moving tillage and screening of a compact surface **T.**

In particular, the machine **1** may till the compact surface **T** to obtain a plurality of tilled clods **Z** and screen them to obtain one or more fractions of fine material **F** and one or more fractions of coarse material **G.**

It is understood that, even though hereinafter for simplicity we refer only to one fraction of fine material **F** and one fraction of coarse material **G,** the fractions may be in any number depending on the configuration of the machine **1** without departing from the scope of the appended claims.

Therefore, the machine **1** may be particularly versatile so as to adapt to different requirements both in terms of granulometry (fine/coarse) of the material and in terms of discharge and/or collection of fine and/or coarse material.

In particular, as better explained below, depending on the configuration of the machine **1** it will be possible to pick-up and/or arrange on the ground or on the surface **T** the fine soil and/or stones in a controlled manner.

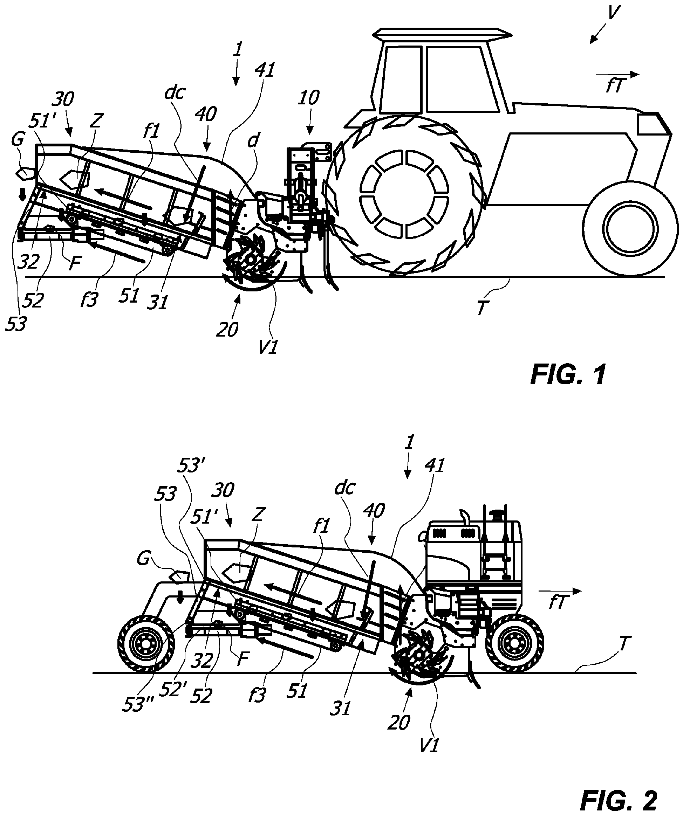

In any case, the machine **1** may be movable or connected to forwarding means in order to allow the moving work of the surface **T.** For example, the machine **1** may be towed by a vehicle **V,** tractor or the like, along a forwarding direction **fT** as shown in Fig. 1.

Suitably, the machine **1** may therefore comprise means **10** to operatively couple the former to the tractor **V** or the like, of a *per se* known type. For example, such coupling means **10** may include a three-point hitch, an hole to be coupled with a corresponding hitch of a tractor tow hitch or other coupling devices for trailers or processing machines with vehicles or tractors of known type.

Advantageously, the machine **1** may comprise a support structure **11** having a substantially longitudinal development. In particular, the support structure **11** may have a front portion **12** comprising the means **10** for coupling the same support structure **11** and the tractor **V.**

On the other hand, as shown in FIG. 2, the machine **1** may be self-propelled, i.e. integral to or an integral part of the tractor or similar vehicle. In this case, it is understood that the support structure may substantially be integral with the tractor.

Suitably, the machine **1** may comprise a front area **2** coupled to the tractor **V** or comprising the hole **10** for the coupling with the tractor **V,** and an opposite rear area **3.** In particular, the support structure **11** may be in correspondence of the front area **2.**

It is understood that the coupling means **10** may adapt to different types of tractors. Suitably, indeed, the supporting structure **11** may have one or more adjustments.

Suitably, the machine **1** may comprise at least one tiller **20** and at least one screen **30,** which may be operatively coupled with the support structure **11.**

In particular, the tiller **20** may comprise a plurality of tillage tools **21** rotating around an rotation axis **X** in a predetermined direction **V1**, for example clockwise, in order to penetrate the compact surface **T,** so as to fractionate the latter into a plurality of clods **Z.**

For example, in the case the compact surface **T** is manure or waste, the latter may be at least partially disintegrated by the tillage tools **21** in order to form the clods, whereas in the case the compact surface **T** is an agricultural land, the clods will be soil clods.

Possibly, the machine **1** may include some deflectors **15** placed before the tiller **20** to deviate the compact surface **T** material towards the tillage tools **21** and/or the longitudinal appendices **16** extending vertically to incise the compact surface **T** in order to guide the operator.

The tillage tools **21,** which may be of a well-known type, for example blades or knives, may be suitably configured and/or shaped to throw the tilled clods **Z** on the screen**30**.

The latter may be a disc screen or a star screen **35,** of a *per se* known type.

It is understood that the space between the discs and the stars **35** and/or between the rows of discs and stars **35,** may define the maximum size of the granulometry of the fine material **F** and/or the minimum size of the granulometry of the coarse material **G.** Possibly, this space may be adjustable.

Preferably, the stars **35** may be made of polymeric material and may be slightly elastic. Thanks to these features, the stars **35** may be slightly deformable in order to avoid stones or other materials getting stuck therebetween, with the risk of breaking the stars **35** and/or damaging parts of the screen **30.**

Thereby the machine **1** may efficiently work even on compact surfaces **T** comprising humid material or wet surfaces, such as humid or wet agricultural soils, compost, sludge or the like.

Advantageously, the discs or the stars **35** may rotate around rotating axes **X'** substantially parallel to the axis **X** in a predetermined direction **V2** opposite to **V1**, for example counterclockwise.

As a consequence of this rotation, in a *per se* known manner, the tilled clods **Z** will forward along the screen **30** starting from the entrance end **31** to the exit end **32** along the forwarding direction **d1** which is perpendicular to the axis **X,** separating into fine material **F** that will fall beneath the working plane **π** of the screen **30** and into coarse material **G** that will outfeed through the end **32.** Suitably, the latter may define the rear area **3** of the machine **1.**

Advantageously, the screen **30** may have an elongated shape along the forwarding direction **f1**.

Preferably, it may have a rectangular shape in plan with a pair of opposite sides **300** having length **l1** greater than the length **l2** of the sides **310.** Suitably, the sides **300** may be substantially perpendicular to the axis **X,** whereas the sides **310** may be substantially parallel thereto.

In order to allow the tilled clods to reach the screen **30,** the tillage tools **21** may throw the tilled clods **Z** along a throwing direction **d,** from the bottom to the top, that is to say in opposite direction to the gravity.

The clods **Z** thrown by the tillage tools **21** may impact against the deflector means, such as a suitably shaped carter **40.** For this purpose, the carter **40** may be placed above the tiller **20** and the screen **30,** and it may include an impact surface **41** arranged along the direction **d.** Furthermore, the tiller **20** and the screen **30** may advantageously be facing each other and be placed in sequence, without any other element interposed therebetween, in particular without any conveyor belt.

Suitably, the carter **40** may have both deflector and protection function. For this purpose, the carter **40** may be removably coupled with the support structure **10,** in order to allow the maintenance and/or the inspections operations of the screen **30.**

As a consequence of the impact against the surface **41,** the tilled clods **Z** will be deflected falling towards the screen **30** in correspondence of the end **31** thereof. For this purpose, the surface **41** may be suitably shaped, for example adequately curved.

Such shaping will promote the fall of the clods **Z** from top to bottom, along a falling direction **dc,** which may intercept the end **31.**

Thereby, the machine **1** will have an extremely high screening efficacy. The residence time of each clod on the working plane **π** is indeed very long, since every clod **Z** covers the whole distance between the ends **31** and **32** along the forwarding direction **f1.**

Furthermore, the machine has low bulkiness, especially in relation to the high screening efficacy.

Moreover, the impact of the clods **Z** against the impact surface **41,** will contribute to reduce them into smaller pieces, contributing to the machine **1** efficacy.

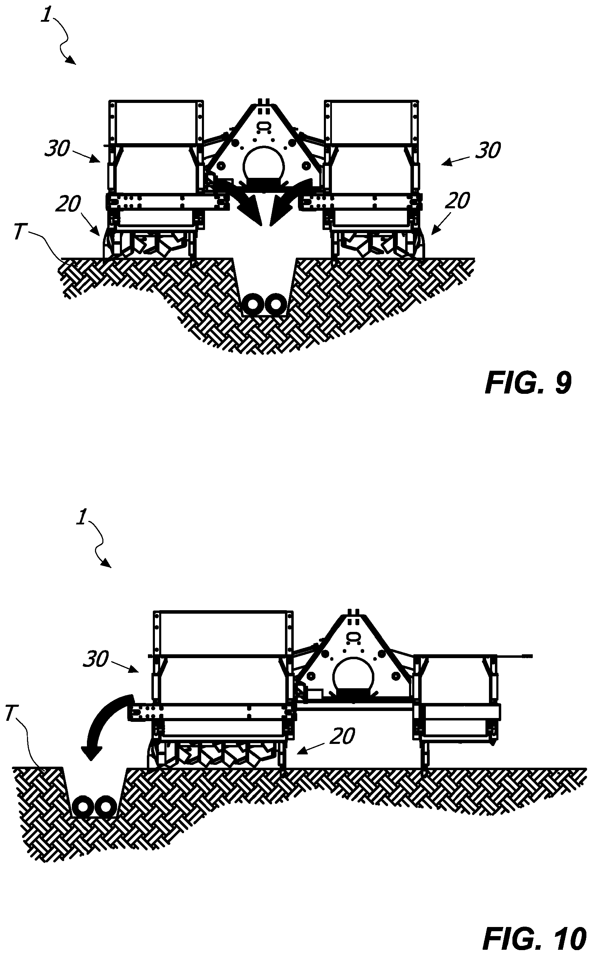

Advantageously, indeed, the tiller **20** may have a length **l3** less than or substantially equal to the length **l2** of the sides **310.** This not only allows the minimization of the machine bulkiness, but also allows several screens **30** to work in parallel, for example as shown in Figs. 9 and 11 to 13.

Moreover, in a preferred but not exclusive embodiment, the working plane **π** may be substantially inclined with respect to the horizontal plane **πO** of a predetermined angle **α**.

In particular, the inclination may be such that the height **h1** of the exit end **32** with respect to the horizontal plane **πO** is greater than the height **h2** of the entrance end **31.**

This makes the screen even more effective, since it increases the residence time of the clods **Z** on the screen **30.**

Once the fine material **F** and coarse material **G** are outfeed from the machine **1,** they may be collected in specific containers or they may fall onto the compact surface **T.**

On the other hand, one of them, for example the coarse material **G,** may be collected in a specific container, whereas the fine material **F** may be discharged on the compact surface **T.** For example, in case the compact surface **T** consists of soil and stones, the latter may be collected in containers and the soil may be discharged again on the ground **T.**

On the other hand, the fine material **F** and/or coarse material **G** may be collected on a truck or another similar vehicle in order to be transported.

In a preferred but not exclusive embodiment, the machine **1** may distribute the fine material **F** and the coarse material **G** in a controlled manner, so that the falling areas thereof on the compact surface **T** are longitudinally staggered.

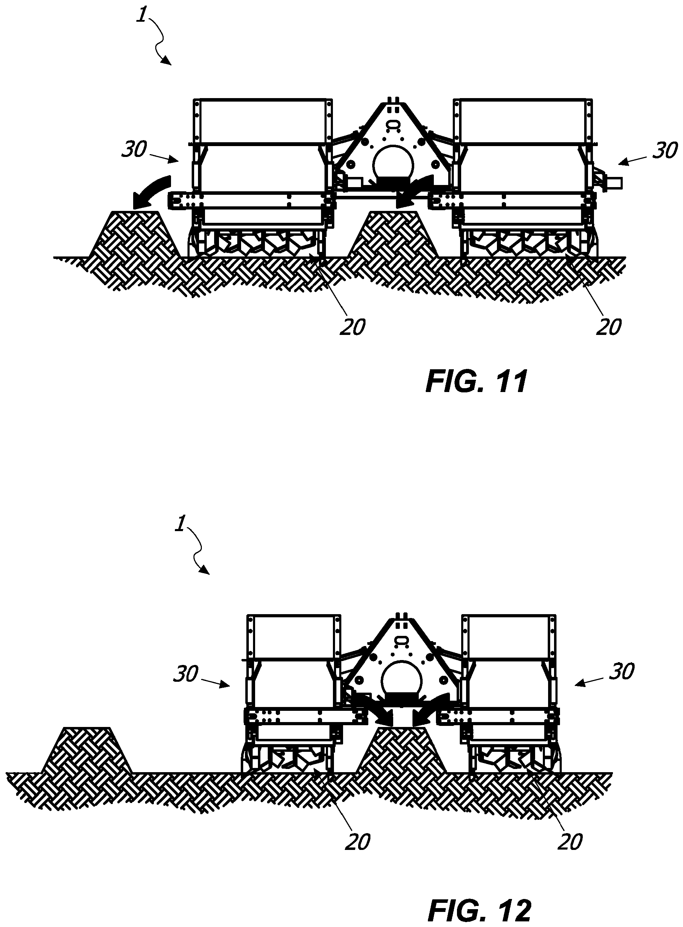

As non-limiting examples, the machine **1** may be used to fill and/or to discharg soil with a predetermined granulometry within an excavation, for example for the placement of pipelines by removing the stones from the ground (Figs. 9 - 10), or to form fine soil rows alternated with coarse soil rows (Figs. 11 - 12), or to arrange the fine and/or coarse material in a predetermined position of the ground, for example in proximity to a row of trees or a vineyard.

In particular, according to the particular embodiment illustrated as a non-limiting purposes in Figs. 11 - 12, the machine **1** may be particularly adapt for the cultivation of asparagus. In fact, in such cultivations it is necessary to form a plurality of fine soil rows interspersed with coarse soil and/or stones.

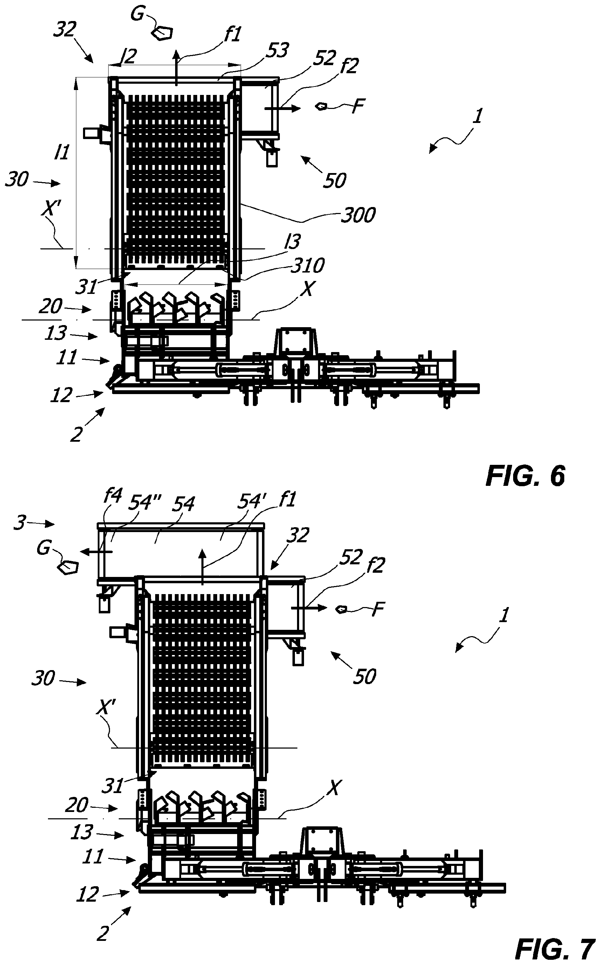

Therefore the moving machine **1** may carry out the tillage of the soil and the screening thereof, placing the fine soil in mound along a predetermined direction and placing the coarse soil adjacent the same mound. In other words, the machine **1** with only a single passage may work the soil for such asparagus cultivation. For this purpose, the machine **1** may be configured as shown in Fig. 6.

Moreover, the machine **1** may be configured to work the ground **T** so as to disintegrate/aerate and possibly biostabilize the same ground **T** with the addition of chemical/bacterial agents.

Suitably, in case the machine **1** comprises a pair of tillers **20** and a pair of screens **30,** the machine **1** may work on different areas of the ground, in order to simultaneously form a pair of rows (Fig. 11) or a single row (Fig. 12).

Similarly, even if the machine **1** is used to fill excavations or to cover pipelines, the machine **1** may include a screen **30** and a tiller **20** (Fig. 10) or a pair of tillers **20** and a pair of screens **30** that simultaneously fill the same excavation (Fig. 9) or different excavations.

In any case, in order to obtain the controlled distribution of fine material **F** and coarse material **G** specific forwarding means may be provided, generally indicated with **50,** which may be arranged beneath the working plane **π** of the screen **30** in order to collect the fine material **F** and/or may be arranged beneath the end **32** to collect the coarse material **G.**

Advantageously, such forwarding means **50,** that may include one or more motion-promoting units such as conveyor belts, hoppers and/or inclined slides, may be configured to promote the forwarding of the fine material **F** and/or of the coarse material **G** along a second forwarding direction **f2** transverse with respect the forwarding direction **f1,** and preferably substantially perpendicular to the latter.

More particularly, such forwarding means **50** may be configured in order to promote the forwarding of the fine material **F** and/or coarse material **G** starting from the falling position from the screen **30** to a position lateral with respect to the latter.

It is understood that the abovementioned falling position is the position that the fine material **F** and/or coarse material **G** would have if the machine **1** had no forwarding means **50.** In particular, for the fine material **F** the falling position is beneath the screen **30,** whereas the falling position for the coarse material **G** is in correspondence of the end **32.**

In this manner, the discharge areas of the fine **F** and coarse **G** materials towards the compact surface **T** will be longitudinally staggered. More particularly, at least one of the discharge areas of the fine **F** or coarse **G** material will be lateral to the screen **30,** as shown in Fig. 6 and 7.

In other words, at least one of the discharge areas of the fine material **F** or coarse material **G** will be spaced apart the forwarding direction **f1**, and more generally spaced apart the falling position of the other of the fine material **F** or the coarse material **G.**

In Fig. 6, indeed, only the discharge position of fine material F is lateral with respect the screen **30** and spaced apart the forwarding direction **f1,** whereas in Fig. 7 both the discharge position of the fine material **F** and coarse material **G** are spaced apart the forwarding direction **f1.**

Without the forwarding means **50** the fine material **F** and the coarse material **G** would overlap each other, since their discharge areas would lie along the direction **f1**.

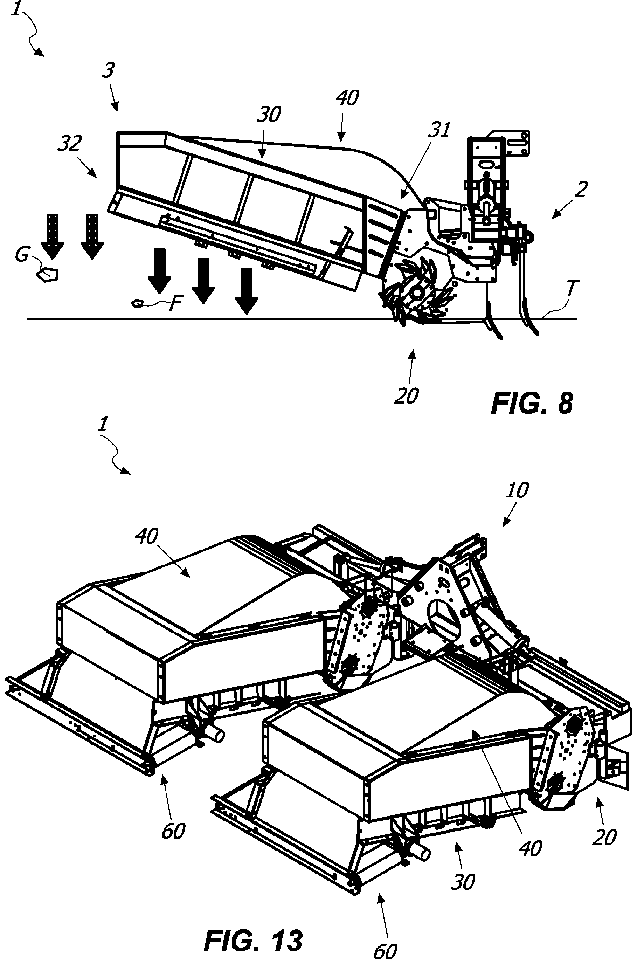

Such embodiment devoid of forwarding means **50** may be useful in case of special needs to stratify the ground, as shown in Fig. 8. This configuration of the machine **1** may allow obtaining a fine substrate covered by a coarse stratum. On the other hand, suitably configuring the forwarding means **50** the opposite result may be achieved, which means a coarse substrate covered by a fine stratum.

The inclination of the screen **30** with respect to the horizontal plane **πO** will promote the arrangement of the forwarding means **50** beneath the working plane **π** thereof.

In a non-exclusive embodiment, not shown in the attached figures, the forwarding means **50** may comprise one or more motion-promoting units suitably placed in order to convey the fine material **F** and/or the coarse material **G** laterally to the screen **30,** as described above.

Depending on the configuration of the motion-promoting units, the lateral movement of the fine material **F** and/or coarse material **G** will simply occur by gravity, for example by an inclined slide and/or a hopper with a lateral exit, or thanks to motor means, for example by one or more conveyor belts suitably oriented.

In a preferred but not exclusive embodiment, the forwarding means **50** may provide a conveyor belt **51** which is substantially coextensive with the screen **30** extending beneath the working plane **π** in order to collect the fine material **F.**

For bulkiness reasons, such conveyor belt **51** may preferably be substantially parallel to the working plane **π**.

Suitably, the conveyor belt **51** may be configured to convey the fine material **F** along a forwarding direction **f3** according to the forwarding direction **f1,** even not necessarily parallel thereto.

The conveyor belt **51** will pick-up the fine material from the falling position and will convey it to the exit **51',** working against gravity.

On the other hand, the conveyor belt **51** may be configured in order to laterally move the fine material **F** along the direction **f2,** as mentioned above.

Advantageously, in correspondence to the exit **51'** of the conveyor belt **51** another conveyor belt **52** may be placed which will collect the fine material **F** and will convey it along the second forwarding direction **f2,** from the entrance **52'** to the exit **52",** which may be placed laterally to the screen **30.**

It is understood that in place of the conveyor belt **52,** one or more motion-promoting units of any type may be placed, which may be motorized or may work by gravity. For example, in place of the conveyor belt **52** an inclined slide extending along the direction **f2** may be provided.

In a non-exclusive embodiment of the invention, the forwarding means **50** may further comprise an additional motion-promoting unit of the coarse material **G** along a forwarding direction **f4** opposite to the forwarding direction **f2,** even not necessarily parallel thereto.

Such motion-promoting unit may be any type, motorized or not, such as an inclined slide **53,** as shown in Fig. 1, 2 and 6, or a conveyor belt **54,** as shown in Fig. 7. Possibly, both motion-promoting units may be provided, such as an inclined slide feeding a conveyor belt, or any other combination of two or more motion-promoting units.

It is understood that such motion-promoting unit **53** and/or **54** may be on the machine **1** in combination or not with the conveyor belt **51** and possibly with the motion-promoting unit **52.**

In any case, the motion-promoting unit **53** and/or **54** may have an entrance **53'** or **54'** for the coarse material **G** placed in correspondence to the end **32** of the screen **30** and an exit **53"** or **54"** laterally placed with respect the latter.

In this manner, upon the moving of the machine **1,** the coarse material **G** and/or fine material **F** may form mounds laterally to the screen **30,** the mounds extending longitudinally over the compact surface **T** parallel to the forwarding direction **fT.**

The materials of the forwarding means **50** may be any type. For example, the conveyor belt **51** and **52** may be made of plastic or metallic material, smooth or rough, more or less inclined, as well as the motion-promoting unit **53** and/or **54.**

Advantageously, the forwarding means **50** and the support structure **11** may be removably coupleable so as to allow the reconfiguration of the machine depending on requirements.

From what described above, it is self-evident that the invention reaches the intended purposes.

The invention is susceptible to numerous modifications and variations, all falling within the scope of protection of the attached claims.

## Claims

1. A machine for the continuous and moving tillage and screening of a compact surface (T), the machine comprising or being operatively connectable with forwarding means for moving the machine on the compact surface **(T),** the machine comprising:
- at least one tiller **(20)** comprising a plurality of tillage tools **(21)** rotating around a first rotation axis **(X)** to obtain a plurality of tilled clods, said tillage tools **(21)** being configured and/or shaped to throw the tilled clods along a throwing direction **(d);**
- at least one screen **(30)** defining a working plane (**π**) substantially parallel to said first rotation axis **(X)** comprising a first end **(31)** facing said at least one tiller **(20)** and an opposite second end **(32);**
- deflector means **(40)** placed along said throwing direction **(d)** to intercept the tilled clods and to deflect them toward said at least one screen **(30);**
wherein said deflector means **(40),** said tiller **(20)** and said at least one screen **(30)** are mutually configured and/or arranged so as the tilled clods thrown by said tillage tools **(21)** and intercepted by the deflector means **(40)** are deflect towards said first end **(31);**
wherein said at least one screen **(30)** is a star screen or a disc screen **(35)** comprising a plurality of shafts rotating around a respective rotation axes **(X')** substantially parallel to each other and to said first axis **(X)** to promote the moving of the tilled clods from said first end **(31)** to said second end **(32)** along a first forwarding direction (**f1**) substantially perpendicular to said first axis **(X);**
wherein said deflector means **(40)** include a carter placed above said tiller **(20)** and said at least one screen **(30),** said carter **(40)** having an impact surface **(41)** configured and/or oriented in relation to said first end **(31)** and to said tillage tools **(21)** in order to be hit by the tilled clods thrown by the tillage tools **(21)** and in order to promote the controlled fall of the tilled clods along a falling direction **(dc)** that intercepts said first end **(31)** as a result of such impact;
wherein said first end **(31)** of said at least one screen **(30)** and said at least one tiller **(20)** are sequentially placed one after the other along said first forwarding direction (**f1**).

2. Machine according to claim 1, wherein said at least one screen **(30)** has an elongated shape along said first forwarding direction (**f1**).

3. Machine according to claim 1 or 2, wherein said at least one screen **(30)** has a substantially rectangular shape with a first and a second pair of opposite sides **(300, 310),** the sides of said first pair **(300)** having length (**l1**) that is greater than the length (**l2**) of the sides of said second pair **(310),** the sides of said first and second pair **(300, 310)** being respectively substantially perpendicular and substantially parallel to said first axis **(X).**

4. Machine according to the preceding claim, wherein said tiller **(20)** has a length (**l3**) less than or substantially equal to the length (**l2**) of the sides of said second pair **(310).**

5. Machine according to claims 1, 2, 3 or 4, wherein said at least one screen **(30)** defines a working plane (**π**) substantially inclined with respect to a horizontal plane (**πO**) passing through said first axis **(X),** the height (**h1**) of said second end **(32)** with respect to said horizontal plane (**πO**) being greater than the height **(h2)** of said first end **(31)** with respect to the same horizontal plane (**πO**).

6. Machine according to the preceding claim, wherein said tillage tools **(21)** rotate in a first predetermined direction (**V1**) and said discs or stars **(35)** rotate in the opposite direction **(V2),** said tillage tools **(21)** preferably rotating clockwise and said discs or stars **(35)** preferably rotating counterclockwise.

7. Machine according to any one of the preceding claims, wherein said at least one screen **(30)** is susceptible to separate said tilled clods into at least one first fraction of fine material **(F)** that outfeed therefrom beneath said working plane (**π**) and at least one second fraction of coarse material **(G)** that outfeed therefrom in correspondence of said second end **(32),** forwarding means **(50)** being provided placed beneath said working plane (**π**) in order to collect said at least one first fraction of fine material **(F)** and/or placed beneath said second end **(32)** in order to collect said at least one second fraction of coarse material **(G),** said forwarding means **(50)** being configured to promote the moving of said at least one first fraction of fine material **(F)** and/or of said at least one second fraction of coarse material **(G)** along a second forwarding direction **(f2)** transverse or substantially perpendicular to said first forwarding direction (**f1**), so that the discharge areas of said at least one first fraction of fine material **(F)** and of said at least one second fraction of coarse material **(G)** towards the compact surface **(T)** are longitudinally staggered.

8. Machine according to the preceding claim, wherein said forwarding means **(50)** are configured to promote the forward of said at least one first fraction of fine material **(F)** and/or said at least one second fraction of coarse material **(G)** from the falling position from said at least one screen **(30)** to a lateral position with respect to the latter, so that at least one discharge areas of said at least one first fraction of fine material **(F)** or of said at least one second fraction of coarse material **(G)** is spaced apart said first forwarding direction (**f1**).

9. Machine according to claim 7 or 8, further comprising a support structure **(11)** which includes said at least one tiller **(20),** said at least one screen **(30)** and said deflector means **(40),** said forwarding means **(50)** and said support structure **(11)** being removably coupleable in order to allow the reconfiguration of the machine depending on the requirements.

10. Machine according to claim 7, 8 or 9, wherein said forwarding means **(50)** comprise at least one first conveyor belt **(51)** extending substantially in a coextensive manner with said at least one screen **(30)** beneath the working plane (**π**) defined by the latter to collect said at least one first fraction of fine material **(F),** said at least one first conveyor belt **(51)** being configured to convey the fine material **(F)** along a third forwarding direction **(f3)** according to said first forwarding direction (**f1**), said at least one first conveyor belt **(51)** being preferably substantially parallel to said working plane (**π**).

11. Machine according to the preceding claim, wherein said at least one first conveyor belt **(51)** has an exit **(51')** for said at least one first fraction of fine material **(F),** said forwarding means **(50)** further comprising at least one first motion-promoting unit **(52)** of said at least one first fraction of fine material **(F)** along said second forwarding direction **(f2)** having an entrance **(52')** placed in correspondence of the exit **(51')** of said at least one first conveyor belt **(51)** and an exit **(52")** placed laterally to said at least one screen **(30).**

12. Machine according to one or more of claims 7 to 11, wherein said forwarding means **(50)** further comprising at least one second motion-promoting unit **(53; 54)** of said at least one second fraction of coarse material **(G)** along a fourth forwarding direction **(f4)** opposite to said second forwarding direction **(f2)** having one entrance **(53'; 54')** placed in correspondence of said second end **(32)** of said at least one screen **(30)** and one exit **(53"; 54")** placed laterally to the latter **(30).**

13. A vehicle **(V)** for the moving work of a compact surface **(T)** to be tilled comprising at least one machine according to one or more of the preceding claims.

## Patentansprüche

1. Maschine zum kontinuierlichen und bewegten Fräsen und Sieben einer kompakten Fläche (T), wobei die Maschine Mittel zum Vortrieb auf der kompakten Fläche (T) umfasst oder mit solchen Mitteln operativ verbindbar ist, umfassend:
- wenigstens eine Fräse (20) umfassend eine Vielzahl von Fräswerkzeugen (21), die um eine erste Rotationsachse (X) rotieren, um eine Vielzahl von gelösten Klumpen zu erhalten, wobei die Fräswerkzeuge (21) zum Werfen der gelösten Klumpen entlang einer Wurfrichtung (d) ausgebildet und/oder geformt sind;
- wenigstens ein Sieb (30), welches eine Arbeitsebene (π) definiert, die sich im Wesentlichen parallel zu der ersten Rotationsachse (X) erstreckt und wenigstens ein erstes der Fräse (20) zugewandtes Ende (31) und ein zweites gegenüberliegendes Ende (32) umfasst;
- Abweiser Mittel (40), die entlang der Wurfrichtung (d) angeordnet sind, um die gelösten Klumpen abzufangen und in Richtung auf das wenigstens eine Sieb (30) abzulenken;
wobei die Abweiser Mittel (40), die Fräse (20) und das wenigstens eine Sieb (30) wechselseitig so angeordnet und/oder ausgebildet sind, dass die durch die Fräswerkzeuge (21) geworfenen gelösten Klumpen, die von den Abweiser Mitteln (40) abgefangen werden, in Richtung auf das erste Ende (31) abgelenkt werden;
wobei das wenigstens eine Sieb (30) als Sternsieb oder Scheibensieb (35) ausgebildet ist, das eine Vielzahl von sich um jeweils eine Rotationsachse (X') drehende Wellen umfasst, die sich im Wesentlichen parallel zueinander und parallel zu der ersten Rotationsachse (X) erstrecken, um die Bewegung der gelösten Klumpen von dem ersten Ende (31) zu dem zweiten Ende (32) entlang einer Förderrichtung (f1) im Wesentlichen senkrecht zu der ersten Achse (X) zu bewirken;
wobei die Abweiser Mittel (40) ein Gehäuse umfassen, das oberhalb der Fräse (20) und des wenigstens einen Siebs (30) angeordnet ist, wobei das Gehäuse (40) eine Aufprallfläche (41) umfasst, die bezüglich des ersten Endes (31) und bezüglich der Fräswerkzeuge (21) so angeordnet und/oder konfiguriert ist, dass sie von den durch die Fräswerkzeuge (21) gelösten und geworfenen Klumpen getroffen wird, um einen kontrollierten Fall der gelösten Klumpen entlang einer Fallrichtung (dc) zu bewirken, die das erst Ende (31) infolge eines solchen Aufpralls scheidet;
wobei das erste Ende (31) des wenigstens einen Siebes (30) und die wenigstens eine Fräse (20) in Förderrichtung (f1) hintereinander angeordnet sind.

2. Maschine nach Anspruch 1, bei welcher das wenigstens eine Sieb (30) eine längliche Form entlang der ersten Förderrichtung (f1) aufweist.

3. Maschine nach einem der Ansprüche 1 oder 2, bei welcher das wenigstens eine Sieb (30) eine im Wesentlichen rechteckige Form mit einem ersten und einem zweiten Paar gegenüberliegender Seiten (300,310) aufweist, wobei die Seiten des ersten Paares (300) eine Länge (l1) aufweisen, die größer ist als die Länge (l2) der Seiten des zweiten Paares (310), wobei sich die Seiten des ersten und des zweiten Paares (300,310) jeweils im Wesentlichen senkrecht und parallel zu der ersten Achse (X) erstrecken.

4. Maschine nach dem vorstehenden Anspruch, wobei die Fräse (20) eine Länge (l3) aufweist, die kleiner oder gleich der Länge (l2) der Seiten des zweiten Paares (310) ist.

5. Maschine nach den Ansprüchen 1, 2, 3 oder 4, bei welcher das wenigstens eine Sieb (30) eine Arbeitsebene (π) definiert, die im Wesentlichen bezüglich einer horizontalen Ebene (π0), die sich durch die erste Achse (X) erstreckt, geneigt ist, wobei die Höhe (h1) des zweiten Endes (32) bezüglich der horizontalen Ebene (π0) größer ist als die Höhe (h2) des ersten Endes (31) bezüglich der gleichen horizontalen Ebene (π0).

6. Maschine nach dem vorstehenden Anspruch, wobei die Fräswerkzeuge (21) sich in einer ersten vorbestimmten Richtung (V1) drehen und die Scheiben oder Sterne (35) sich in der entgegengesetzten Richtung (V2) drehen, wobei die Fräswerkzeuge (21) sich vorzugsweise im Uhrzeigersinn und die Scheiben oder Sterne (35) sich vorzugsweise gegen den Uhrzeigersinn drehen.

7. Maschine nach einem der vorstehenden Ansprüche, bei welcher das wenigstens eine Sieb (30) dazu ausgebildet ist, die gefrästen Klumpen in wenigstens eine erste Fraktion feinen Materials (F) die unterhalb der Arbeitsebene (π) ausgegeben wird und wenigstens eine zweite Fraktion groben Materials (G) zu trennen, die von diesem in Kommunikation mit dem zweiten Ende (32) ausgegeben wird, wobei Transportmittel (50) vorgesehen sind, die unterhalb der Arbeitsebene (π) angeordnet sind, um die wenigstens erste Fraktion des feinen Materials (F) zu sammeln und/oder unterhalb des zweiten Endes (32) angeordnet sind, um die wenigstens zweite Fraktion des groben Materials (G) zu sammeln, wobei die Fördermittel (50) so ausgebildet sind, dass sie die Bewegung der wenigstens einen ersten Fraktion des feinen Materials (F) und/oder der wenigstens einen zweiten Fraktion des groben Materials (G) entlang einer zweiten Förderrichtung (f2) quer oder im Wesentlichen senkrecht zu der ersten Förderrichtung (f1) bewirken, sodass die Ausgabebereiche der wenigstens einen ersten Fraktion des feinen Materials (F) und der wenigstens einen zweiten Fraktion des groben Materials (G) in Richtung auf die kompakte Fläche (T) in Längsrichtung versetzt sind.

8. Maschine nach dem vorstehenden Anspruch, bei welcher die Fördermittel (50) ausgebildet sind, um die Förderung der wenigstens einen ersten Fraktion des feinen Materials (F) und/oder der wenigstens einen zweiten Fraktion des groben Materials (G) von einer Fallposition von dem wenigstens einen Sieb (30) in eine seitliche Position bezüglich der ersteren zu bewirken, sodass wenigstens ein Ausgabebereich der wenigstens einen ersten Fraktion des feinen Materials (F) und der wenigstens zweiten Fraktion des groben Materials (G) von der ersten Förderrichtung (F1) beabstandet ist.

9. Maschine nach Anspruch 7 oder 8, weiterhin umfassend eine Aufnahmestruktur (11), welche den wenigstens einen Fräser (20), das wenigstens eine Sieb (30) und die Abweiser Mittel (40) umfasst, wobei die Fördermittel (50) und die Aufnahmestruktur (11) lösbar miteinander verbunden sind, um eine Neukonfiguration der Maschine entsprechend dem Anwendungszweck zu ermöglichen.

10. Maschine nach Anspruch 7, 8 oder 9, bei welcher die Fördermittel (50) wenigstens einen ersten Fördergurt (51) umfassen, der sich im Wesentlichen in einer flächengleichen Art und Weise mit dem wenigstens einen Sieb (30) unterhalb der Arbeitsebene (π) erstreckt, die durch das Letztere definiert ist, um die wenigstens eine erste Fraktion feinen Materials (F) zu sammeln, wobei der wenigstens eine erste Fördergurt (51) ausgebildet ist, um das feine Material (F) entlang einer dritten Förderrichtung (f3) zu fördern, die der ersten Förderrichtung (f1) entspricht, wobei sich der wenigstens eine erste Fördergurt (51) vorzugsweise im Wesentlichen parallel zu der Arbeitsebene (π) erstreckt.

11. Maschine nach dem vorhergehenden Anspruch, wobei der wenigstens eine erste Fördergurt (51) einen Austritt (51') für die wenigstens eine erste Fraktion des feinen Materials (F) aufweist, die Fördermittel (50) weiterhin wenigstens eine erste bewegungserzeugende Einheit (52) der wenigstens einen ersten Fraktion des feinen Materials (F) entlang der zweiten Förderrichtung (f2) umfasst, die einen mit dem Austritt (51') korrespondierenden Eintritt (52') des wenigstens einen ersten Fördergurts (51) und einen Austritt (52") umfasst, der seitlich zu dem wenigstens einen Sieb (30) angeordnet ist.

12. Maschine nach einem oder mehreren der Ansprüche 7 bis 11, bei welcher die Fördermittel (50) weiterhin wenigstens eine zweite bewegungserzeugende Einheit (53; 54) der wenigstens einen zweiten Fraktion des Grobmaterials (G) entlang einer vierten Förderrichtung (f4) gegenläufig zu der zweiten Förderrichtung (f2) umfasst, umfassend einen Eintritt (53'; 54'), der korrespondierend zu dem zweiten Ende (32) des wenigstens einen Siebs (30) angeordnet ist und einen Austritt (53"; 54"), der seitlich zu letzterem (30) angeordnet ist.

13. Fahrzeug (V) für die bewegte Bearbeitung einer kompakten zu fräsenden Fläche (T) umfassend wenigstens eine Maschine nach einem oder mehreren der vorstehenden Ansprüche.

## Revendications

1. Machine de labour et de criblage en continu et en mouvement d'une surface compacte (T), la machine comprenant ou pouvant être connectée de manière opérationnelle à des moyens de transfert permettant de déplacer la machine sur la surface compacte (T), la machine comprenant :
- au moins une barre de labour (20) comprenant une pluralité d'outils de labour (21) tournant autour d'un premier axe de rotation (X) pour obtenir une pluralité de mottes labourées, lesdits outils de labour (21) étant configurés et/ou façonnés pour projeter les mottes labourées le long d'une direction de projection (d) ;
- au moins un crible (30) définissant un plan de travail (π) sensiblement parallèle audit premier axe de rotation (X) comprenant une première extrémité (31) faisant face à ladite au moins une barre de labour (20) et une deuxième extrémité opposée (32) ;
- des moyens déflecteurs (40) placés le long de ladite direction de projection (d) pour intercepter les mottes labourées et pour les faire dévier vers ledit au moins un crible (30) ;
dans laquelle lesdits moyens déflecteurs (40), ladite barre de labour (20) et ledit au moins un crible (30) sont configurés et/ou agencés mutuellement de sorte que les mottes labourées projetées par lesdits outils de labour (21) et interceptées par les moyens déflecteurs (40) sont déviées vers ladite première extrémité (31) ;
dans laquelle ledit au moins un crible (30) est un crible à étoiles ou un crible à disques (35) comprenant une pluralité d'axes tournant autour d'axes de rotation respectifs (X') sensiblement parallèles les uns aux autres et audit premier axe (X) pour favoriser le déplacement des mottes labourées de ladite première extrémité (31) à ladite deuxième extrémité (32) le long d'une première direction de transfert (f1) sensiblement perpendiculaire audit premier axe (X) ;
dans laquelle lesdits moyens déflecteurs (40) comprennent un carter placé au-dessus de ladite barre de labour (20) et dudit au moins un crible (30), ledit carter (40) ayant une surface d'impact (41) configurée et/ou orientée par rapport à ladite première extrémité (31) et auxdits outils de labour (21) afin d'être frappée par les mottes labourées jetées par les outils de labour (21) et afin de favoriser la descente contrôlée des mottes labourées le long d'une direction descendante (dc) qui intercepte ladite première extrémité (31) en conséquence d'un tel impact ;
dans laquelle ladite première extrémité (31) dudit au moins un crible (30) et ladite au moins une barre de labour (20) sont placées séquentiellement l'une après l'autre le long de ladite première direction de transfert (f1).

2. Machine selon la revendication 1, dans laquelle ledit au moins un crible (30) présente une forme allongée le long de ladite première direction de transfert (f1).

3. Machine selon la revendication 1 ou 2, dans laquelle ledit au moins un crible (30) présente une forme sensiblement rectangulaire avec une première et une deuxième paire de côtés opposés (300, 310), les côtés de ladite première paire (300) ayant une longueur (l1) qui est supérieure à la longueur (l2) des côtés de ladite deuxième paire (310), les côtés desdites première et deuxième paires (300, 310) étant respectivement sensiblement perpendiculaires et sensiblement parallèles audit premier axe (X).

4. Machine selon la revendication précédente, dans laquelle ladite barre de labour (20) a une longueur (l3) inférieure ou sensiblement égale à la longueur (l2) des côtés de ladite deuxième paire (310).

5. Machine selon les revendications 1, 2, 3 ou 4, dans laquelle ledit au moins un crible (30) définit un plan de travail (π) sensiblement incliné par rapport à un plan horizontal (πO) traversant ledit premier axe (X), la hauteur (h1) de ladite deuxième extrémité (32) par rapport audit plan horizontal (πO) étant supérieure à la hauteur (h2) de ladite première extrémité (31) par rapport au même plan horizontal (πO).

6. Machine selon la revendication précédente, dans laquelle lesdits outils de labour (21) tournent dans une première direction prédéterminée (V1) et lesdits disques ou lesdites étoiles (35) tournent dans la direction opposée (V2), lesdits outils de labour (21) tournant de préférence dans le sens des aiguilles d'une montre et lesdits disques ou lesdites étoiles (35) tournant de préférence dans le sens inverse des aiguilles d'une montre.

7. Machine selon l'une quelconque des revendications précédentes, dans lequel ledit au moins un crible (30) est susceptible de séparer lesdites mottes labourées en au moins une première fraction de matériau fin (F) qui sort de celle-ci sous ledit plan de travail (π) et au moins une deuxième fraction de matériau brut (G) qui sort de celle-ci en correspondance de ladite deuxième extrémité (32), les moyens de transfert (50) étant disposés sous ledit plan de travail (π) afin de collecter ladite au moins une première fraction de matériau fin (F) et/ou placés sous ladite deuxième extrémité (32) afin de collecter ladite au moins une deuxième fraction de matériau brut (G), lesdits moyens de transfert (50) étant configurés pour favoriser le déplacement de ladite au moins une première fraction de matériau fin (F) et/ou de ladite au moins une deuxième fraction de matériau brut (G) le long d'une deuxième direction de transfert (f2) transversale ou sensiblement perpendiculaire à ladite première direction de transfert (f1), de sorte que les zones de déchargement de ladite au moins une première fraction du matériau fin (F) et de ladite au moins une deuxième fraction de matériau brut (G) vers la surface compacte (T) sont décalées longitudinalement.

8. Machine selon la revendication précédente, dans laquelle lesdits moyens de transfert (50) sont configurés pour favoriser le transfert de ladite au moins une première fraction de matériau fin (F) et/ou de ladite au moins une deuxième fraction de matériau brut (G) à partir de la position descendante dudit au moins un crible (30) à une position latérale par rapport à ce dernier, de sorte qu'au moins une des zones de déchargement de ladite au moins une première fraction de matériau fin (F) ou de ladite au moins une deuxième fraction de matériau brut (G) est espacée de ladite première direction de transfert (f1).

9. Machine selon la revendication 7 ou 8, comprenant en outre une structure de support (11) qui comprend ladite au moins une barre de labour (20), ledit au moins un crible (30) et lesdits moyens déflecteurs (40), lesdits moyens de transfert (50) et ladite structure de support (11) pouvant être couplés de manière amovible afin de permettre la reconfiguration de la machine en fonction des exigences.

10. Machine selon la revendication 7, 8 ou 9, dans laquelle lesdits moyens de transfert (50) comprennent au moins une première bande transporteuse (51) s'étendant sensiblement en correspondance avec ledit au moins un crible (30) sous le plan de travail (π) défini par ce dernier pour collecter ladite au moins une première fraction de matériau fin (F), ladite au moins une première bande transporteuse (51) étant configurée pour acheminer le matériau fin (F) le long d'une troisième direction de transfert (f3) en fonction de ladite première direction de transfert (f1), ladite au moins une première bande transporteuse (51) étant de préférence sensiblement parallèle audit plan de travail (π).

11. Machine selon la revendication précédente, dans laquelle ladite au moins une première bande transporteuse (51) présente une sortie (51') pour ladite au moins une première fraction de matériau fin (F), lesdits moyens de transfert (50) comprenant en outre au moins une première unité favorisant le mouvement (52) de ladite au moins une première fraction de matériaux fins (F) le long de ladite deuxième direction de transfert (f2) ayant une entrée (52') placée en correspondance de la sortie (51') de ladite au moins une première bande transporteuse (51) et une sortie (52") placée de manière latérale par rapport audit au moins un crible (30).

12. Machine selon une ou plusieurs des revendications 7 à 11, dans laquelle lesdits moyens de transfert (50) comprenant en outre au moins une deuxième unité favorisant le mouvement (53 ; 54) de ladite au moins une deuxième fraction de matériau brut (G) le long d'une quatrième direction de transfert (f4) opposée à ladite deuxième direction de transfert (f2) ayant une entrée (53' ; 54') placée en correspondance de ladite deuxième extrémité (32) dudit au moins un crible (30) et une sortie (53" ; 54") placée de manière latérale par rapport à ce dernier (30).

13. Véhicule (V) destiné au travail en mouvement d'une surface compacte (T) à labourer comprenant au moins une machine selon une ou plusieurs des revendications précédentes.
